# FASCICULE DE BREVET EUROPEEN

(11) **EP 3 792 118 B1**
(45) Date de publication et mention de la délivrance du brevet: **15.11.2023**
(21) Numéro de dépôt: 20194386.7
(22) Date de dépôt: 03.09.2020
(51) Int. Cl.: B60R 21/05, B62D 1/187, B60R 13/02

(54) **ELEMENT D HABILLAGE D'UNE COLONNE DE DIRECTION DE VEHICULE AUTOMOBILE**
VERKLEIDUNGSELEMENT FÜR LENKSÄULE EINES KRAFTFAHRZEUGS
TRIM COMPONENT FOR A STEERING COLUMN OF A MOTOR VEHICLE

(30) Priorité: 16.09.2019 FR 1910203
(43) Date de publication de la demande: 17.03.2021
(73) Titulaire: Renault s.a.s, 92100 Boulogne Billancourt (FR)
(72) Inventeur: CHAPUIS, Claude, 91140 Villebon sur Yvette (FR); CORRE, Jean-Marie, 78770 THOIRY (FR); FABRE, Jean-Michel, 95600 EAUBONNE (FR); MARCEAU, Thierry, 92500 rueil malmaison (FR)
(74) Mandataire: Renault Group

(56) Documents cités:
- EP-A1- 2 780 198
- EP-A1- 3 100 932
- DE-U1- 20 017 192
- FR-A1- 3 076 523
- JP-A- 2008 068 807

## Description

L'invention a pour objet un élément d'habillage d'une colonne de direction de véhicule automobile, en particulier pour une colonne de direction à hauteur réglable. L'invention concerne notamment un élément d'habillage formant une coque et faisant partie d'un ensemble d'habillage du type comprenant une coque supérieure et une coque inférieure définissant entre elles un passage axial pour la colonne de direction.

Ce type d'ensemble d'habillage peut comprendre en outre un revêtement souple reliant la coque supérieure à une partie supérieure de la planche de bord. Ce revêtement permet de masquer les éléments techniques de la colonne de direction quel que soit le réglage de la position du volant. Le revêtement, par exemple en TEP (tissus enduit plastique), textile ou cuir, est en général fixé par une barrette au tableau de bord et par une autre barrette à la coque supérieure. Il peut cependant arriver que la barrette de fixation du revêtement à la coquille supérieure se décroche lors du réglage de la position du volant. En outre, en raison de l'existence de deux points de fixation (au tableau de bord et à la coque supérieure) le temps de montage est relativement long et complexe. Le document EP2780198 A1 divulgue le préambule de la revendication indépendante.

Il existe donc un besoin pour la réalisation d'un ensemble d'habillage qui permette un maintien d'un revêtement souple quel que soit le réglage de la position du volant et qui soit simple à monter.

A cet effet, un premier objet de l'invention concerne un élément d'habillage en forme de coque, destiné à former une coque supérieure d'un ensemble d'habillage pour une colonne de direction réglable de véhicule automobile, notamment du type comprenant une coque supérieure et une coque inférieure définissant entre elles un passage présentant une direction axiale destiné à recevoir la colonne de direction.

Selon l'invention, l'élément d'habillage comprend :
- une coque en matériau polymère expansé présentant une surface externe, un premier bord d'extrémité destiné à être disposé du côté d'une extrémité de la colonne de direction reliée à un volant lorsque l'élément d'habillage masque en partie la colonne de direction et un deuxième bord d'extrémité disposé d'un côté opposé au premier bord d'extrémité suivant une direction longitudinale de la coque,
- un revêtement en matériau souple comportant une première portion solidaire de la coque et qui recouvre la totalité de la surface externe de la coque dont elle épouse la forme et une deuxième portion libre non solidarisée à la coque située du côté du deuxième bord d'extrémité de la coque.

Il n'est ainsi plus nécessaire d'assembler le revêtement à la coque par un élément tel qu'une barrette, ce qui permet de réduire le temps de montage de l'élément d'habillage. En outre, la réalisation de la coque en matériau polymère expansé permet de réaliser un élément d'habillage léger. Enfin, le revêtement recouvrant au moins en partie cette coque, l'aspect esthétique de l'élément d'habillage s'en trouve amélioré.

Par « matériau souple », on entend un matériau apte à se déformer, notamment élastiquement, sous l'effet de son propre poids ou d'une force prédéterminée.

Par « matériau polymère expansé », on entend un matériau alvéolaire formé d'une phase polymère solide et d'une phase gazeuse dispersée. Ce type de matériau alvéolaire est aussi parfois appelé « mousse » (« foam » en anglais). Il s'agit notamment de matériaux rigides, à savoir qui ne se déforment pas sous l'effet de leur propre poids. De tels matériaux expansés présentent l'avantage d'être légers, ce qui permet d'alléger le poids de l'élément d'habillage.

Selon d'autres modes de réalisation, l'élément d'habillage peut comprendre une ou plusieurs des caractéristiques suivantes, prise(s) isolément ou selon toute combinaison techniquement possible :
- la coque présente au moins un insert de fixation noyé dans le matériau de la coque. Cet insert de fixation peut notamment être en matériau polymère non déformable,
- le deuxième bord d'extrémité de la coque présente une forme en U dont l'ouverture est dirigée du côté opposée au premier bord d'extrémité, la première portion du revêtement recouvrant entièrement l'espace libre entre les bras formant le U,
- le revêtement recouvre la totalité de la surface externe de la coque, améliorant davantage l'aspect visuel de l'élément d'habillage,
- le revêtement est fixé sur la surface de la coque par collage ou thermogainage,
- le revêtement est en un matériau choisi parmi le cuir, un textile, un textile enduit, un tricot enduit, une feuille de matériau polymère,
- la coque est en polypropylène expansé.

L'invention concerne également un ensemble d'habillage pour une colonne de direction réglable de véhicule automobile, ledit ensemble d'habillage comprenant une coque supérieure et une coque inférieure définissant entre elles un passage présentant une direction axiale destiné à recevoir la colonne de direction, caractérisé en ce que la coque supérieure est formée d'un élément d'habillage selon l'invention, dont la direction longitudinale s'étend parallèlement à direction axiale. Notamment, la coque supérieure peut être fixée à la coque inférieure par les inserts de fixation noyés dans le matériau de la coque supérieure.

L'invention concerne également un poste de conduite comprenant une planche de bord, une colonne de direction, un volant relié à une extrémité de la colonne de direction, et un ensemble d'habillage selon l'invention masquant une partie au moins de la colonne de direction, le premier bord d'extrémité de la coque supérieure étant disposé du côté du volant et le revêtement s'étendant jusqu'à la planche de bord à laquelle un bord libre de sa deuxième portion libre est fixé.

Notamment, le bord libre de la deuxième portion libre du revêtement peut être fixé à la planche de bord par une barrette de fixation.

L'invention concerne enfin un véhicule automobile comprenant un poste de conduite selon l'invention.

L'invention est maintenant décrite en référence aux dessins annexés, non limitatifs, dans lesquels :
[Fig. 1] La figure 1 représente une vue en coupe longitudinale simplifiée et partielle d'un poste de conduite selon un mode de réalisation de l'invention.
[Fig. 2] La figure 2 représente une vue en perspective de dessus d'un ensemble d'habillage comprenant un élément d'habillage selon un mode de réalisation de l'invention.
[Fig. 3] La figure 3 représente une vue en perspective de dessus de la coque de l'élément d'habillage de la figure 2.
[Fig. 4] La figure 4 représente une vue en perspective de dessus de l'élément d'habillage de la figure 2.
[Fig. 5] La figure 5 représente une vue en perspective de dessus de l'élément d'habillage de la figure 4 et d'une barrette de fixation à la planche de bord.

Dans la présente description, les termes avant, arrière / supérieur, inférieur, dessus, dessous, font référence aux directions avant et arrière / haute et basse du véhicule, lorsque le poste de conduite est monté sur un véhicule. Les axes X, Y, Z, forment un repère orthonormé et correspondent respectivement à l'axe longitudinal (d'avant en arrière), transversal et vertical du véhicule, ce dernier reposant sur le sol. La direction verticale correspond ainsi à la direction de la gravité et les axes X et Y s'étendent dans un plan horizontal.

Par sensiblement horizontal, longitudinal ou vertical, on entend une direction/un plan formant un angle d'au plus ±10° avec une direc tion/un plan horizontal, longitudinal ou vertical.

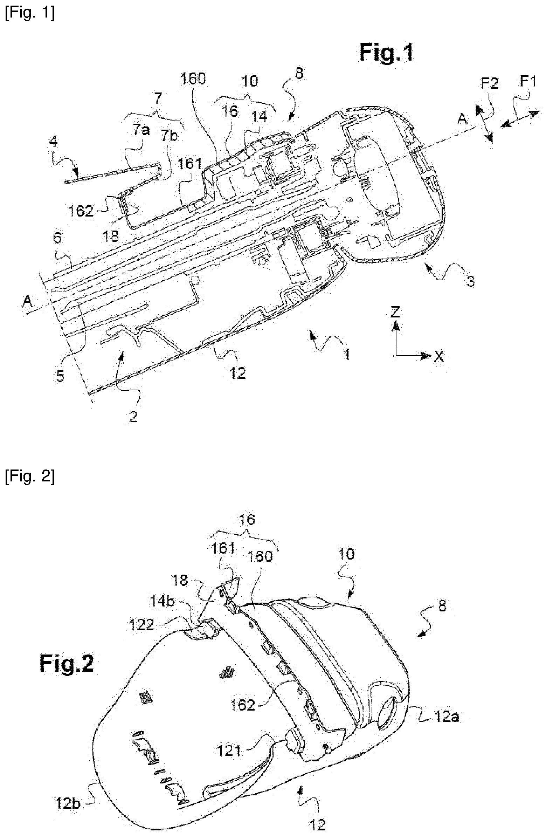

Tel que représenté sur la figure 1, un véhicule automobile comprend un poste de conduite 1 comportant une colonne de direction 2, un volant 3, une planche de bord 4 et un ensemble 8 d'habillage de la colonne de direction 2. La colonne de direction 2 relie le volant 3 aux roues du véhicule pour commander le braquage des roues et la direction du véhicule.

La colonne de direction 2 comprend un arbre 5 servant à relier le volant 3 aux roues, et un support 6 de montage de la colonne de direction 2 sur la planche de bord 4. L'arbre 5 est monté rotatif autour d'un axe A-A sur le support 6, cet axe constituant l'axe de la colonne de direction 2. L'arbre 5 reçoit à son extrémité arrière le volant 3.

De manière classique, l'arbre 5 est déplaçable axialement par rapport au support 6 pour permettre de régler la position du volant 3 suivant l'axe A-A, comme illustré par la flèche F1 sur la Figure 1. Ce réglage est connu sous le nom de réglage en profondeur du volant 3. De manière classique, le support 6 est également monté mobile par rapport à la planche de bord 4 autour d'un axe perpendiculaire à l'axe A-A, pour permettre la rotation de la colonne de direction 2 et le réglage de l'inclinaison de l'axe A-A. Ceci permet de régler la hauteur du volant 3 comme illustré par la flèche F2 sur la Figure 1.

De façon connue, la colonne de direction 2 comprend un dispositif d'immobilisation (non représenté) permettant de maintenir le support 6 dans une position déterminée par rapport à la planche de bord 4, et de maintenir l'arbre 5 dans une position déterminée suivant l'axe A-A par rapport au support 1.

La planche de bord 4 s'étend suivant une direction générale transversale Y du véhicule automobile. Elle comprend un bord 7 s'étendant transversalement au-dessus de la colonne de direction 2, dont une face supérieure 7a forme par exemple le dessous de la zone de planche de bord recevant le compteur et dont la face inférieure 7b est située en regard de la colonne de direction 2, au dessus de celle-ci.

L'ensemble d'habillage 8 est destiné à entourer et masquer la portion de la colonne de direction 2 s'étendant dans l'habitacle, vers l'arrière à partir de la planche de bord 4. L'ensemble d'habillage 8 comprend un élément d'habillage supérieur 10 et un élément d'habillage inférieur 12, tous les deux en forme de coque, prenant entre eux la colonne de direction 2. Ces éléments d'habillage 10, 12 définissent ainsi un passage axial pour la colonne de direction. Autrement dit, ce passage présente une direction axiale correspondant à l'axe A-A de la colonne de direction 2. Les éléments d'habillage 10, 12 forment respectivement une coque supérieure et une coque inférieure de l'ensemble d'habillage 8. L'élément d'habillage inférieur 12 s'étend au-dessous de la colonne de direction 2 et est susceptible de passer axialement sous la planche de bord 4, tel que représenté dans l'exemple. L'élément d'habillage supérieur 10 s'étend au-dessus de la colonne de direction 2 entre le volant 3 et la planche de bord 4, plus précisément entre le volant 3 et le bord 7 de la planche de bord.

Tel que représenté sur la Figure 2, l'élément d'habillage inférieur 12 présente une forme de gouttière concave à concavité orientée vers l'élément d'habillage supérieur 10. Il présente un premier bord d'extrémité 12a disposé du côté de l'extrémité de la colonne de direction 2 reliée au volant 3 lorsque l'ensemble d'habillage 8 masque la colonne de direction et un deuxième bord d'extrémité 12b disposé d'un côté opposé au premier bord d'extrémité 12a suivant l'axe A-A.

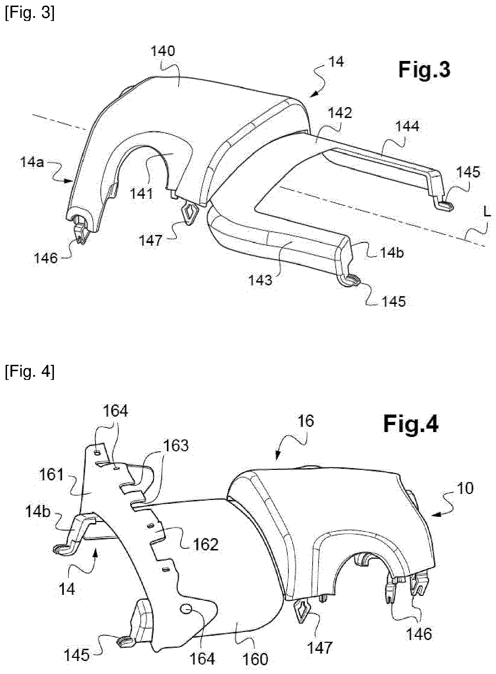

Selon l'invention, l'élément d'habillage supérieur 10 comprend une coque 14 représentée figure 3 réalisée en matériau polymère expansé, par exemple obtenue par moulage par injection. Il s'agit dans l'exemple d'une pièce monobloc.

Le matériau polymère expansé utilisé peut être du polypropylène expansé ou du polystyrène expansé. Pour limiter la bruyance, il est toutefois préférable d'utiliser du polypropylène expansé. Avantageusement, on peut utiliser un polypropylène expansé de masse volumique de 30 à 90 g/L, de préférence de 30 à 45 g/L.

Cette coque 14 présente un premier bord d'extrémité 14a disposé du côté de l'extrémité de la colonne de direction 2 reliée au volant 3 lorsque l'ensemble d'habillage 8 masque la colonne de direction et un deuxième bord d'extrémité 14b disposé d'un côté opposé au premier bord d'extrémité 14a suivant une direction longitudinale L de la coque 14, confondue avec l'axe A-A lorsque l'élément d'habillage masque la colonne de direction. Les premiers bords d'extrémités 12a, 14a s'étendent ici dans un plan perpendiculaire ou sensiblement perpendiculaire à l'axe A-A.

Selon l'invention, la coque 14 est recouverte au moins en partie, et de préférence entièrement comme dans l'exemple, d'un revêtement en matériau souple 16 (voir figures 1, 4, 5). Ce revêtement 16 comporte :
- une première portion 160 solidaire de la coque 14 et qui recouvre au moins en partie (ici complètement) une surface externe 140 de la coque 14 dont elle épouse la forme, et
- une deuxième portion 161 libre non solidarisée à la coque située du côté du deuxième bord d'extrémité 14b de la coque 14.

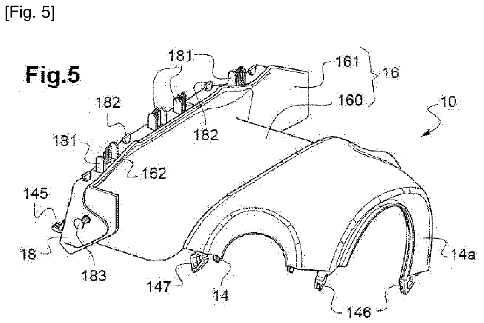

La deuxième portion 161 libre du revêtement est fixée à la planche de bord 4, ici par une barrette 18. Cette barrette vient plaquer un bord libre 162 de la deuxième portion 161 contre le bord 7 de la planche de bord, sur toute la longueur du bord libre 162, tel que visible sur les figures 2 et 5. La barrette 18 se présente par exemple sous la forme d'une plaque dont un bord est fixé à la planche de bord.

On notera que, dans l'exemple, ce bord libre 162 présente des échancrures 163 et des orifices 164 pour permettre respectivement le passage de doigts de fixation 181 et de pions 182 solidaires de la barrette 18, ou encore de vis ou rivet de fixation ou similaires 183 à la barrette 18 (figure 5). L'invention n'est toutefois pas limitée à cette forme particulière de la barrette 18 et du bord libre 162, pourvu que la barrette 18 permette de plaquer le bord libre 162 contre la planche de bord 4 et de le fixer à celui-ci.

Le revêtement 16 peut être un tissu enduit, un tricot enduit, du cuir, un textile (tissus ou tricot) ou encore une feuille de matériau polymère. Cette dernière peut être une feuille en un polymère thermoplastique tel que le chlorure de polyvinyle (PVC), l'acrylonitrile butadiène styrène (ABS). Pour un meilleur aspect, on préfèrera cependant un textile (tissu ou tricot) enduit ou du cuir.

Le revêtement 16 est par exemple fixé à la surface externe 140 de la coque supérieure par collage ou thermogainage.

Le thermogainage consiste à appliquer une peau de surface, ici le revêtement 16, sur une pièce plastique préencollée. La colle utilisée pour le préencollage est en général une colle dont le pouvoir adhésif est activé par chauffage, par exemple une colle polyuréthanne.

Dans l'exemple, tel que visible figure 3, la coque 14 présente une partie arrière 141 concave à concavité orientée vers l'élément d'habillage inférieur 12 et une partie avant 142 présentant deux bras 143 et 144 s'étendant en regard de bords latéraux 120, 121 respectivement de l'élément d'habillage inférieur 12 (fig. 2). Le deuxième bord d'extrémité 14b de la coque 14 présente ainsi une forme en U dont l'ouverture est dirigée du côté opposée au premier bord 14a. En outre, les bras formant le U s'étendent ici sensiblement parallèlement à la direction longitudinale L de la coque 14.

La partie avant 142 présente ainsi une forme échancrée, tel que visible sur la figure 3, ce qui permet de réduire la quantité de matière utilisée pour réaliser la coque 14 sans nuire à l'aspect de l'élément d'habillage, cette partie étant recouverte par le revêtement 16. La première portion 160 du revêtement recouvre en effet entièrement l'espace libre entre les bras formant le U, procurant un bel aspect de l'élément d'habillage supérieur 10 malgré la forme échancrée de la partie avant 142.

La coque 14 représentée dans l'exemple présente également des éléments de fixation 145-147 à l'élément d'habillage inférieur 12. Ces éléments de fixation sont ici des inserts de fixation 145-147 dont une extrémité est noyée dans le matériau de la coque 14. Ces inserts de fixation 145-147 sont avantageusement réalisés en un matériau résistant, non déformable, par exemple en matériau polymère, notamment un matériau polymère moulable par injection, tel que du polypropylène ou de l'ABS, ou encore un matériau métallique (acier, aluminium, alliage d'aluminium), bien que cela ne soit pas préféré.

La coque 14 est ici fixée à l'élément d'habillage inférieur 12 par six éléments de fixation, un élément de fixation 145 étant solidaire de l'extrémité de chaque bras 143, 144 et la partie arrière 141 de la coque 14 présentant deux éléments de fixation 146, 147 sur chacun de ses bords latéraux. Ces éléments de fixation 145-147 sont ici des éléments s'engageant avec mise en prise au travers d'orifices correspondant de l'élément d'habillage inférieur 12.

L'élément d'habillage supérieur 10 formé de la coque 14 recouverte du revêtement 16 présente l'avantage d'être simple à monter, avec uniquement une fixation à l'élément d'habillage inférieur 12, ici par clippage et la fixation du bord libre 162 du revêtement 16 à la planche de bord. Le montage est ainsi simple et rapide. En outre, les matériaux expansés étant relativement légers, l'élément d'habillage supérieur 10 est allégé par rapport aux coques classiques en matériau polymère non expansé. Le revêtement améliore l'aspect esthétique de l'élément d'habillage supérieur 10 et il n'y a plus de risque de décrochage du revêtement de la coque lors du réglage de la position du volant.

## Revendications

1. Elément d'habillage (10) en forme de coque, destiné à former une coque supérieure d'un ensemble d'habillage pour une colonne de direction (2) réglable de véhicule automobile, **caractérisé en ce qu'**il comprend :
- une coque (14) en matériau polymère expansé présentant une surface externe (140), un premier bord d'extrémité (14a) destiné à être disposé du côté d'une extrémité de la colonne de direction reliée à un volant lorsque l'élément d'habillage masque en partie la colonne de direction et un deuxième bord d'extrémité (14b) disposé d'un côté opposé au premier bord d'extrémité suivant une direction longitudinale L de la coque,
- un revêtement (16) en matériau souple comportant une première portion (160) solidaire de la coque et qui recouvre la totalité de la surface externe (140) de la coque (14) dont elle épouse la forme et une deuxième portion libre (161) non solidarisée à la coque située du côté du deuxième bord d'extrémité (14b) de la coque.

2. Elément d'habillage (10) selon la revendication 1, **caractérisé en ce que** la coque (14) présente au moins un insert de fixation (145-147) noyé dans le matériau de la coque.

3. Elément d'habillage selon l'une quelconque des revendications 1 ou 2, **caractérisé en ce que** le deuxième bord d'extrémité (14b) de la coque présente une forme en U dont l'ouverture est dirigée du côté opposée au premier bord d'extrémité (14a), la première portion (160) du revêtement recouvrant entièrement l'espace libre entre les bras formant le U.

4. Elément d'habillage (10) selon l'une quelconque des revendications 1 à 3, **caractérisé en ce que** le revêtement (16) est fixé sur la surface de la coque par collage ou thermogainage.

5. Elément d'habillage (10) selon l'une quelconque des revendications 1 à 4, **caractérisé en ce qu'**il comprend au moins une des caractéristiques suivantes :
- le revêtement (16) est en un matériau choisi parmi le cuir, un textile, un textile enduit, un tricot enduit, une feuille de matériau polymère,
- la coque (14) est en polypropylène expansé.

6. Ensemble d'habillage (8) pour une colonne de direction (2) réglable de véhicule automobile, ledit ensemble d'habillage comprenant une coque supérieure (10) et une coque inférieure (12) définissant entre elles un passage présentant une direction axiale destiné à recevoir la colonne de direction, **caractérisé en ce que** la coque supérieure est formée d'un élément d'habillage selon l'une quelconque des revendications 1 à 5, dont la direction longitudinale s'étend parallèlement à direction axiale.

7. Poste de conduite (1) d'un véhicule automobile comprenant une planche de bord (4), une colonne de direction (2) et un volant (3) relié à une extrémité de la colonne de direction, **caractérisé en ce qu'**il comprend un ensemble d'habillage (8) selon la revendication 6 masquant une partie au moins de la colonne de direction, le premier bord d'extrémité (14a) de la coque (14) étant disposé du côté du volant et le revêtement (16) s'étendant jusqu'à la planche de bord à laquelle un bord libre (162) de sa deuxième portion libre (161) est fixé.

8. Poste de conduite (2) selon la revendication 7, **caractérisé en ce que** le bord libre (162) de la deuxième portion libre (161) du revêtement est fixé à la planche de bord par une barrette de fixation (18).

9. Véhicule automobile comprenant un poste de conduite selon la revendication 7 ou 8.

## Patentansprüche

1. Schalenförmiges Verkleidungselement (10), das dazu bestimmt ist, eine obere Schale einer Verkleidungsbaugruppe für eine verstellbare Lenksäule (2) eines Kraftfahrzeugs zu bilden, **dadurch gekennzeichnet, dass** es Folgendes umfasst:
- eine Schale (14) aus expandiertem Polymermaterial mit einer Außenfläche (140), einer ersten Außenkante (14a), die dazu bestimmt ist, auf der Seite eines mit einem Lenkrad verbundenen Endes der Lenksäule angeordnet zu sein, wenn das Verkleidungselement die Lenksäule teilweise verdeckt, und einer zweiten Außenkante (14b), die auf der Seite angeordnet ist, die der ersten Außenkante in Längsrichtung L der Schale gegenüberliegt,
- eine Verkleidung (16) aus weichem Material mit einem ersten Abschnitt (160), der fest mit der Schale verbunden ist und die gesamte Außenfläche (140) der Schale (14) bedeckt, deren Form er annimmt, und einem freien zweiten Abschnitt (161), der nicht mit der Schale verbunden ist und sich auf der Seite der zweiten Außenkante (14b) der Schale befindet.

2. Verkleidungselement (10) nach Anspruch 1, **dadurch gekennzeichnet, dass** die Schale (14) mindestens einen Befestigungseinsatz (145 - 147) umfasst, der in das Material der Schale eingebettet ist.

3. Verkleidungselement nach einem der Ansprüche 1 oder 2, **dadurch gekennzeichnet, dass** die zweite Außenkante (14b) der Schale eine U-Form aufweist, deren Öffnung auf die der ersten Außenkante (14a) gegenüberliegende Seite gerichtet ist, wobei der erste Abschnitt (160) der Verkleidung den Freiraum zwischen den Armen, die das U bilden, vollständig bedeckt.

4. Verkleidungselement (10) nach einem der Ansprüche 1 bis 3, **dadurch gekennzeichnet, dass** die Verkleidung (16) durch Kleben oder Thermobeschichten an der Oberfläche der Schale befestigt ist.

5. Verkleidungselement (10) nach einem der Ansprüche 1 bis 4, **dadurch gekennzeichnet, dass** es zumindest die folgenden Merkmale umfasst:
- die Verkleidung (16) ist aus einem Material gebildet, das aus Leder, Textil, beschichtetem Textil, beschichtetem Strick und einer Folie aus Polymermaterial ausgewählt ist,
- die Schale (14) ist aus expandiertem Polypropylen gebildet.

6. Verkleidungsbaugruppe (8) für eine verstellbare Lenksäule (2) eines Kraftfahrzeugs, wobei die Verkleidungsbaugruppe eine obere Schale (10) und eine untere Schale (12) umfasst, die zwischen sich einen Durchgang mit einer axialen Richtung definieren, der dazu bestimmt ist, die Lenksäule aufzunehmen,
**dadurch gekennzeichnet, dass** die obere Schale aus einem Verkleidungselement nach einem der Ansprüche 1 bis 5 gebildet ist, dessen Längsrichtung sich parallel zur axialen Richtung erstreckt.

7. Fahrerplatz (1) eines Kraftfahrzeugs, umfassend ein Armaturenbrett (4), eine Lenksäule (2) und ein Lenkrad (3), das mit einem Ende der Lenksäule verbunden ist, **dadurch gekennzeichnet, dass** er eine Verkleidungsbaugruppe (8) nach Anspruch 6 umfasst, die zumindest einen Teil der Lenksäule verdeckt, wobei die erste Außenkante (14a) der Schale (14) auf der Seite des Lenkrads angeordnet ist und die Verkleidung (16) sich bis zum Armaturenbrett erstreckt, an dem eine freie Kante (162) seines freien zweiten Abschnitts (161) befestigt ist.

8. Fahrerplatz (2) nach Anspruch 7, **dadurch gekennzeichnet, dass** die freie Kante (162) des freien zweiten Abschnitts (161) der Verkleidung durch einen Befestigungssteg (18) am Armaturenbrett befestigt ist.

9. Kraftfahrzeug, umfassend einen Fahrerplatz nach Anspruch 7 oder 8.

## Claims

1. Trim element (10) in the form of a shell and intended to form an upper shell of a trim assembly for an adjustable steering column (2) of a motor vehicle, said trim element being **characterized in that** it comprises:
- a shell (14) made of expanded polymer material and having an outer surface (140), a first end edge (14a) that is intended to be arranged at the end of a steering column that is connected to a steering wheel when the trim element is partially concealing the steering column, and a second end edge (14b) that is at the opposite end to the first end edge along a longitudinal direction L of the shell,
- a covering (16) made of flexible material and comprising a first portion (160) that is secured to the shell and fully covers, and conforms to the shape of, the outer surface (140) of the shell (14), and a free second portion (161) that is not secured to the shell and is situated on the side of the second end edge (14b) of the shell.

2. Trim element (10) according to Claim 1, **characterized in that** the shell (14) has at least one fastening insert (145-147) embedded in the material of the shell.

3. Trim element according to either one of Claims 1 and 2, **characterized in that** the second end edge (14b) of the shell has a U shape, the opening of which is directed away from the first end edge (14a), the first portion (160) of the covering entirely covering the free space between the arms forming the U.

4. Trim element (10) according to any one of Claims 1 to 3, **characterized in that** the covering (16) is fastened to the surface of the shell by adhesive bonding or heat-sheathing.

5. Trim element (10) according to any one of Claims 1 to 4, **characterized in that** it comprises at least one of the following features:
- the covering (16) is made of a material selected from leather, a textile, a coated textile, a coated knit, a sheet of polymer material,
- the shell (14) is made of expanded polypropylene.

6. Trim assembly (8) for an adjustable steering column (2) of a motor vehicle, said trim assembly comprising an upper shell (10) and a lower shell (12), between which a passage that has an axial direction and is intended to receive the steering column is defined, said trim assembly being **characterized in that** the upper shell is formed of a trim element according to any one of Claims 1 to 5, the longitudinal direction of which extends parallel to the axial direction.

7. Driver's station (1) of a motor vehicle comprising a dashboard (4), a steering column (2) and a steering wheel (3) connected to one end of the steering column, said driver's station being **characterized in that** it comprises a trim assembly (8) according to Claim 6 concealing at least part of the steering column, the first end edge (14a) of the shell (14) being arranged at the steering wheel end and the covering (16) extending as far as the dashboard to which a free edge (162) of the free second portion (161) of said covering is fastened.

8. Driver's station (2) according to Claim 7, **characterized in that** the free edge (162) of the free second portion (161) of the covering is fastened to the dashboard by a fastening strip (18).

9. Motor vehicle comprising a driver's station according to Claim 7 or 8.
